# EUROPEAN PATENT SPECIFICATION

(11) **EP 2 203 665 B1**
(45) Date of publication and mention of the grant of the patent: **05.10.2011**
(21) Application number: 08834626.7
(22) Date of filing: 28.08.2008
(51) Int. Cl.: F16H 61/26, F16H 61/36, F16H 63/34

(54) **ADJUSTMENT MECHANISM FOR A SPEED-CHANGE CABLE OF A MANUAL TRANSMISSION**
MECHANISMUS ZUR EINSTELLUNG EINES GESCHWINDIGKEITSÄNDERUNGSKABELS EINES MANUELLEN GETRIEBES
MÉCANISME DE RÉGLAGE POUR UN CÂBLE DE CHANGEMENT DE VITESSE D'UNE TRANSMISSION MANUELLE

(30) Priority: 25.09.2007 JP 2007247003
(43) Date of publication of application: 07.07.2010
(73) Proprietor: Toyota Jidosha Kabushiki Kaisha, Toyota-shi, Aichi 471-8571 (JP)
(72) Inventor: NAKAHARA, Yoshihito, Toyota-shi Aichi 471-8571 (JP)
(74) Representative: TBK
(86) International application number: PCT/JP2008/002339
(87) International publication number: WO 2009/040985

(56) References cited:
- EP-A- 1 244 126
- DE-A1- 4 441 826
- FR-A- 2 885 981
- GB-A- 2 295 208
- US-A1- 2005 072 259

## Description

### Technical Field

The present invention relates to a mechanism used for adjusting a length of a cable for a speed-change operation of a manual transmission mounted in an automobile, etc.

### Background Art

Conventionally, as disclosed in, for example, Patent Citation 1 and Patent Citation 2 below, in a manual transmission mounted in an automobile, etc., a driver operates a shift lever in order to select a desired shift stage, and a speed-change operation is carried out as a result of an operation force thereof being transferred to a speed change mechanism via a speed-change cable.

Therefore, it is necessary to adjust a length of the above-mentioned speed-change cable in order to allow the gear-change mechanism to achieve the prescribed shift stage as a result of the force of operation of the shift lever by the driver being suitably transferred to this speed change mechanism. That is to say, in a case wherein the length of the speed-change cable deviates from a suitable length, there is a possibility that the shift stage required by the driver may not be achieved.

Generally, in terms of a speed-change cable, a select cable for performing a select operation and a shift cable for performing a shift operation are provided. An end of these cables is connected to the shift lever. Furthermore, another end of these cables is each connected to an outer lever (select outer lever, shift outer lever) linked with a shift-and-select shaft provided inside the speed change mechanism. That is to say, a select operation force and a shift operation force of the shift lever from the driver are transferred as an operation force for rotation and sliding of the shift-and-select shaft by the select cable and the shift cable, respectively, via each outer lever, a mutual engagement condition of gears is changed by selecting and moving a prescribed shift fork (for example, a shift fork for a first shift stage and a second shift stage), and as a result thereof, a speed change operation is performed.

It should be noted that, in a 6-speed manual transmission, a Low position corresponding to a first shift stage and a second shift stage, an N position corresponding to a third shift stage and a fourth shift stage, a High position corresponding to a fifth shift stage and a sixth shift stage, and a reverse select position corresponding to reverse (reverse stage) exist as select positions selected by the shift lever.

Incidentally, various types of this kind of manual transmission exist. For example, in order that unintended selection to a reverse select position does not occur, a type (hereinafter referred to as a heavy select type) wherein an operation force required for a select operation to the reverse select position is set higher than an operation force required for a select operation between select positions of a forward travel stage (the Low position, N position, High position) and a type wherein, in order to perform a select operation from a select position of a forward travel stage to the reverse select position, an operation other than that select operation is required, etc. are known. With regard to the latter type requiring an operation other than the select operation, for example, a type (hereinafter referred to as a pull collar type) provided with an operating section called a pull collar at a lower side of a shift knob of the shift lever and making it possible to perform a select operation to the reverse select position as a result of a pulling-up operation of this pull collar and a type (hereinafter referred to as a push lever type) requiring, in order to perform a select operation of the shift lever to the reverse select position, an operation of pushing down this shift lever are known. In particular, this pull collar type and this push lever type have an advantage of, when compared with the above-explained heavy select type, allowing the required select operation force to be reduced.

Even in any of the above-explained types, furthermore, in cases wherein, as explained above, the length of the select cable is not suitably adjusted, there is a possibility that disparity will occur between the select position of the shift lever and the select position (rotation position or slide position) of the shift-and-select shaft, and that the select position for achieving the shift stage required by the driver cannot be suitably achieved.

In addition, although suitably adjusting the length of this select cable is, regardless of the type of the manual transmission, a required item, that requirement is particularly high in a transmission configured as explained hereinafter. A concrete description is provided hereinafter.

First, the above-explained shift lever and select outer lever are each connected to a spring applying a spring force for return to a neutral position (N position: a select position corresponding to the third shift stage and the fourth shift stage in a 6-speed manual transmission). In this case, if the spring force of the spring (hereinafter, the outer lever spring) for returning the select outer lever to the neutral position is set higher than the spring force of the spring (hereinafter, the shift lever spring) for returning the shift lever to the neutral position, it causes a deterioration of a shift feeling of the shift lever.

That is because, although the shift knob must, upon a speed change, be operated with a large force resisting the high spring force of the above-mentioned outer lever spring and a sliding resistance of the select cable, upon return of the shift knob to the neutral position, return to the neutral position occurs due to the low spring force of the shift lever spring, and that return operation is sluggish.

Therefore, in the opposite way to that explained above, setting of the spring force of the shift lever spring so as to be higher than the spring force of the outer lever spring was conceived.

With this, however, the position of the select outer lever, or in other words, the select position of the shift-and-select shaft is greatly affected by the spring force of the shift lever spring, and in a case wherein the length of the select cable is not suitably adjusted at this time, there is a possibility that a suitable relationship between the position of the shift lever in a select direction and the position of the shift-and-select lever in the select direction cannot be achieved. For example, although the shift lever is set to the neutral position by the above-mentioned high spring force of the shift lever spring, there is a possibility that, as a result of the fact that the above-mentioned length of the shift cable is not suitably adjusted, the shift-and-select lever will be at a select position selecting a shift stage differing from the central position. That is to say, even if the shift lever is subjected to a shift operation from the neutral position to, for example, the third shift stage, there is a possibility that, as a result of the occurrence of disparity in the select position of the shift-and-select shaft, the shift stage required by the driver may not be achieved.

Previously, as a cable adjustment operation for suitably adjusting the relative positional relationship of the shift lever and the shift-and-select shaft, a fixing mechanism for fixing the shift-and-select shaft at a prescribed position (for example, the Low position corresponding to the first shift stage and the second shift stage) was provided inside the speed change mechanism, and in the fixed condition thereof, adjustment of the length of the select cable was carried out with the shift lever similarly set to the Low position. Furthermore, a release mechanism was also provided for releasing the above-mentioned fixed condition after the completion of this length adjustment operation.
Patent Citation 1: JP 2006-10003A
Patent Citation 2: JP 2005-233281A
Patent Citation 3: JP H8-74978A
FR-A-2 885 981 discloses an adjustement mechanism according to the preamble of claim 1.

### Disclosure of Invention

### Technical Problem

However, in a case wherein a configuration fixing and releasing the shift-and-select shaft was provided inside the speed change mechanism as explained above, the configuration of the fixing mechanism and the release mechanism became complicated, and consequently, cost became high and the number of components increased. Not only that, but the effect of looseness occurring between various mechanism components between the shift-and-select shaft and the shift lever remained; it was highly probable that the position of the shift-and-select shaft would become displaced with respect to the operation position of the shift lever by an amount corresponding to this looseness; and the ability to suitably adjust the positional relationship of the shift lever and the shift-and-select shaft became limited.

It should be noted that although a mechanism adjusting a mounting angle of an inhibitor switch detecting a rotation position of a manual shaft of an automatic transmission is disclosed in the above-mentioned Patent Citation 3, application also to a technology for achieving suitability of the positional relationship of the shift lever and shift-and-select lever in a manual transmission is difficult.

In light of such points, an object of the present invention is set at providing an adjustment mechanism for a speed-change cable of a manual transmission making it possible to adjust the length of a cable with a high degree of precision while also having a simple configuration.

### Technical Solution

### Problem Solving Principle

In terms of a solving principle of the present invention devised in order to achieve the above-mentioned object, a transmission case is effectively used, and by positioning the outer lever with respect to an outer surface of this transmission case, the shift-and-select shaft is positioned at a prescribed position, and in this condition, the length of the speed-change cable can be adjusted. By using the transmission case in this way, it is possible to suitably adjust the length of the speed-change cable without causing the number of components to increase, and since this position fixing is performed outside the speed change mechanism, it is possible to suitably adjust the length of the speed-change cable without being affected by looseness of structural components inside the speed change mechanism.

### Solving Means

The object is solved by an adjustement mechanism according to claim 1.

Specifically, the present invention is predicated on an adjustment mechanism for performing adjustment of a length of a speed-change cable in a manual transmission comprising a shift lever operated by a driver; a shift-and-select shaft enabling a speed-change operation by a speed change mechanism provided inside a transmission case; and an outer lever provided outside the transmission case, linked with the shift-and-select shaft, and also connected to the shift lever so as to be capable of transferring an operation force via the speed-change cable. This speed-change cable adjustment mechanism is provided with a fixing means for fixing the shift-and-select shaft at a prescribed cable adjustment standard position by fixing a position of the outer lever on the transmission case.

When performing adjustment of the length of the speed-change cable using this specific item, first of all, the position of the outer lever is fixed on the transmission case using the fixing means. As a result of the position of this outer lever being fixed, the shift-and-select shaft linked to this outer lever is also fixed (fixed in a rotation direction and a slide direction), and this becomes a cable adjustment standard position. The position of the shift lever (for example, a select position) is positioned so as to correspond to this cable adjustment standard position of the shift-and-select shaft, and in this condition, the shift lever and the outer lever are connected using the speed-change cable. As a result thereof, a suitable length of the speed-change cable can be acquired and the positional relationship of the shift lever and the outer lever, or in other words, the positional relationship of the shift lever and the shift-and-select shaft can be achieved in a precise and reliable manner. In this way, in this solving means, length adjustment of the speed-change cable can be suitably carried out without the number of components increasing as the transmission case is used, and in addition, without being affected by looseness occurring between various mechanism components inside the speed change mechanism as position fixing of the shift-and-select shaft is performed outside the speed change mechanism using the outer lever. It should be noted that, in consideration of extension of the speed-change cable as a result of the passage of time, the length of the speed-change cable adjusted in this case can be set slightly shorter than the suitable length (shorter within a range wherein erroneous operation of a speed change will not occur).

Concrete examples of the configuration of the shift lever include the following. That is to say, the above-mentioned shift lever is provided with a reverse operation mechanism operated upon a select operation from a select position of a forward travel stage to a select position of a reverse travel stage, and the select position for the reverse travel stage is provided independent of the select position for the forward travel stage in a select direction thereof. Examples of the reverse operation mechanism referred to here are, as explained above, a pull-collar mechanism as provided in a pull-collar type or a push-lever mechanism as provided in a push-lever type.

As the reverse operation mechanism is not operated during an operation of adjusting the length of the speed-change cable in a speed change mechanism configured in this way, the shift lever can be positioned at an outermost end of a select position for a forward travel stage such as, for example, the Low position corresponding to the first shift stage and the second shift stage. Using this, the cable adjustment standard position of the shift-and-select shaft fixed by the fixing means is set to the select position corresponding to the first shift stage and the second shift stage (rotation position or slide position), and with the shift lever in a condition of being positioned at the above-mentioned Low position, the shift lever and the outer lever are connected using the gear change cable. As a result thereof, the length of the speed-change cable can be suitably acquired and the positional relationship of the shift lever and the shift-and-select shaft can be achieved in a precise and reliable manner.

Furthermore, by also setting the cable adjustment standard position of the shift-and-select shaft fixed by the fixing means at a position corresponding to a stopper position constituting a boundary section of the select position for the forward travel stage and the select position for the reverse travel stage in the select direction of the shift lever, in the same way as the above-explained case, the positional relationship of the shift lever and the shift-and-select shaft can be achieved in a precise and reliable manner.

An example of a concrete configuration of the above-mentioned fixing means is as follows. That is to say, the fixing means is configured such that an opening is formed on each of the outer lever and the transmission case, and the position of the outer lever is fixed on the transmission case by aligning these openings and inserting a pin therein.

As a result of this, using an extremely simple operation of aligning the openings and inserting a pin, the position of the outer lever can be fixed on the transmission case, and consequently, the shift-and-select shaft can be fixed at the above-mentioned cable adjustment standard position. It is, therefore, possible to simplify the adjustment operation of the length of the speed-change cable and to significantly reduce the duration of the length adjustment operation.

### Advantageous Effects

With the present invention, a transmission case is effectively used, and by positioning the outer lever with respect to an outer surface of this transmission case, the shift-and-select shaft is positioned at a prescribed position, and in this condition, the length of the speed-change cable can be adjusted. In this way, length adjustment of the select cable can be suitably carried out without the number of components increasing as the transmission case is used, and in addition, without being affected by looseness occurring between various mechanism components inside the speed change mechanism as position fixing of the shift-and-select shaft is performed outside the speed change mechanism using the outer lever.

### Brief Description of the Drawings

[fig.1]FIG. 1 is an exterior drawing showing a schematic configuration of a manual transmission.
[fig.2]FIG. 2 is a view showing an outline of a shift pattern of a 6-speed manual transmission.
[fig.3]FIG. 3 is a view for explaining a select-shift mechanism of the manual transmission.
[fig.4]FIG. 4 is a perspective view showing an inner lever and a peripheral section thereof.
[fig.5]FIG. 5 is an arrow view seen from the direction of an arrow A of FIG. 4.
[fig.6]FIG. 6 is an arrow view seen from the direction of an arrow B of FIG. 3.
[fig.7]FIG. 7 is a perspective view showing a select outer lever prior to adjustment of a select-cable length and a peripheral section thereof.
[fig.8]FIG. 8 is a perspective view showing a select outer lever upon adjustment of a select-cable length and a peripheral section thereof.
[fig.9]FIG. 9 is a cross-sectional view showing a condition wherein a pin is inserted into an opening of each of a positioning-use arm and a positioning boss.

### Explanation of Reference

1. Shift lever
2. Select cable (speed-change cable)
3. Shift cable (speed-change cable)
4. Speed change mechanism
41. Transmission case
5. Shift-and-select shaft
9. Pin
21. Select outer lever
24. Positioning-use arm (fixing means)
24c. Opening
31. Shift outer lever
43. Positioning boss (fixing means)
43a. Opening

### Best Mode for Carrying Out the Invention

The following is a description of a preferred embodiment of the present invention, with reference to the accompanying drawings. This embodiment explains a case of application of the present invention to a manual transmission having 6 forward shift stages and 1 reverse shift stage.

### Schematic Configuration of Manual Transmission

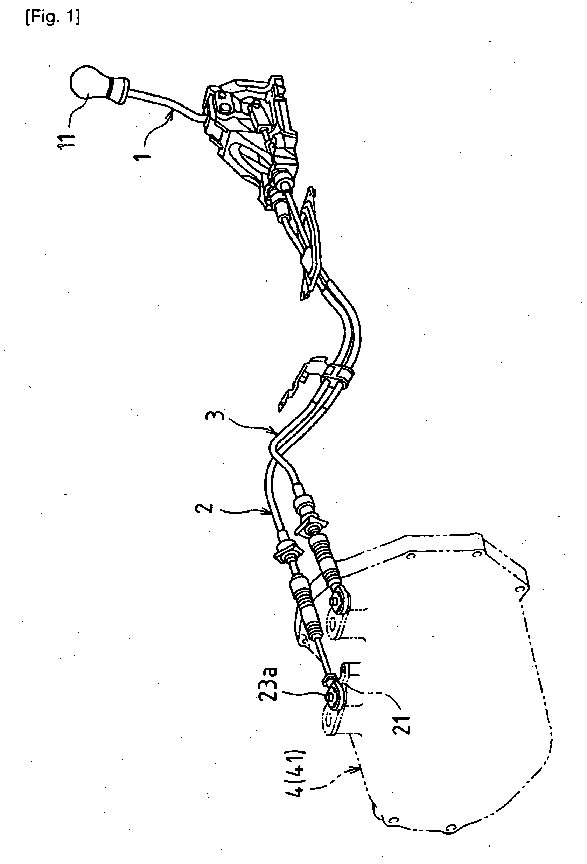

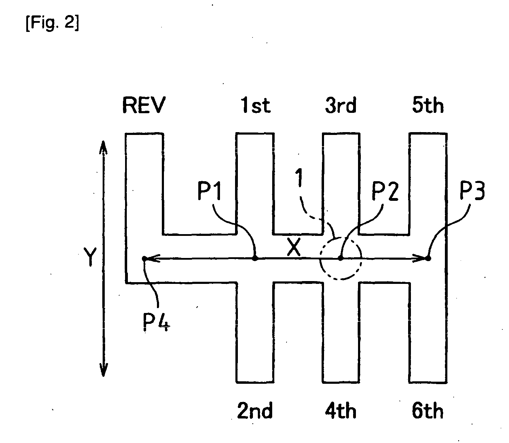

FIG. 1 is a perspective view showing a shift lever 1 for performing a speed change operation of the manual transmission according to an embodiment of the present invention, a select cable 2 and a shift cable 3 constituting a speed-change cable, and a speed change mechanism 4 (the speed change mechanism 4 is shown using imaginary lines). Furthermore, FIG. 2 shows an outline of a shift pattern (shift gate shape) of a 6-speed manual transmission according to this embodiment. The shift lever 1 (shown in the figure using an imaginary line) is configured having a shape making it possible to perform a select operation in a direction shown by an arrow X in FIG. 2 and a shift operation in a direction shown by an arrow Y, perpendicular to the direction of the select operation.

A first-speed / second-speed select position (Low position) P1, a third-speed / fourth-speed select position (N position) P2, a fifth-speed / sixth-speed select position (High position) P3, and a reverse select position P4 are lined up in the select operation direction. As shown, in the shift pattern of this embodiment, the select position for reverse is set independently with respect to the select positions of forward travel stages in the select direction thereof.

As a result of a shift operation at the above-mentioned first-speed / second-speed select position P1 (operation in the direction of the arrow Y), the shift lever 1 can be operated to a first shift-stage position 1st or a second shift-stage position 2nd. Furthermore, as a result of a shift operation at the third-speed / fourth-speed select position P2, the shift lever 1 can be operated to a third shift-stage position 3rd or a fourth shift-stage position 4th. Similarly, as a result of a shift operation at the fifth-speed / sixth-speed select position P3, the shift lever 1 can be operated to a fifth shift-stage position 5th or a sixth shift-stage position 6th. In addition, as a result of a shift operation at the reverse select position P4, the shift lever 1 can be operated to a reverse (reverse stage) position REV.

Furthermore, a pull collar mechanism (reverse operation mechanism) is provided on the shift lever 1 according to this embodiment. This pull collar mechanism is an item for ensuring that a select to the reverse select position cannot be carried out unintentionally and, for example, is configured such that an operation section (omitted from the figure) known as a pull collar is provided at a lower side of a shift knob 11 of the above-mentioned shift lever 1 and a select operation to the reverse position is possible as a result of a pulling-up operation of this pull collar. Furthermore, a push lever mechanism (reverse operation mechanism) requiring a pushing-down operation of this shift lever 1 in order to perform a select operation of the shift lever 1 to the reverse select position can be provided in place of this pull collar mechanism. By providing this type of pull collar mechanism or push lever mechanism, it is possible to reduce the required select operation force with respect to that of the above-explained heavy select type.

### Select-shift Mechanism

Next, a select-shift mechanism for transferring the above-mentioned operation force of the shift lever 1 to the speed change mechanism 4 in order to establish each of the shift stages from the first shift stage to the sixth shift stage and the reverse stage by operating the shift lever 1 as explained above is explained.

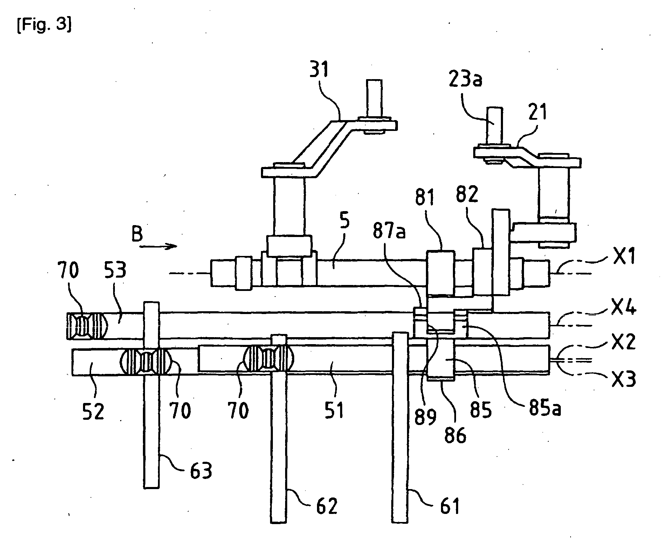

FIG. 3 is a view showing a select-shift mechanism of the manual transmission. Inside a transmission case 41 (see FIG. 1), the manual transmission is provided with a shift-and-select shaft 5 and three shift fork shafts, namely a first shift fork shaft 51, a second shift fork shaft 52, and a third shift fork shaft 53.

The above-mentioned shift-and-select shaft 5 is supported by a bearing, etc. (not shown in the figure) so as to be capable of rotating and moving in a direction of an axis X1. Furthermore, the shift-and-select shaft 5 is provided with a select outer lever 21 operated to a plurality (4 in this embodiment) of select positions and a shift outer lever 31 operated to a neutral position and two shift positions sandwiching the neutral position. These are dynamically linked with the shift lever 1 subjected to a speed change operation by the driver, and in accordance with a select operation force transferred in connection with an operation of the shift lever 1 in the select direction, the select outer lever 21 rotates the shift-and-select shaft 5 around the axis X1. Furthermore, the shift outer lever 31 moves the shift-and-select shaft 5 in the direction of the axis X1 in accordance with a shift operation force transferred in connection with an operation of the shift lever 1 in the shift direction.

The above-mentioned first shift fork shaft 51 is supported in parallel with the shift-and-select shaft 5 and so as to be capable of moving in a direction of an axis X2. Furthermore, this first shift fork shaft 51 is connected to a first shift fork 61 provided between a first shift stage gear and a second shift stage gear (not shown in the figure) and fitted onto a sleeve of a synchro mechanism selectively transferring motive energy to this first shift stage gear and second shift stage gear, and when the first shift fork shaft 51 is moved in the direction of the axis X2, the first shift fork 61 is also moved in the axis direction in an interlocked manner so that the first shift stage or the second shift stage is selectively established.

The above-mentioned second shift fork shaft 52 is supported in parallel with the shift-and-select shaft 5 and so as to be capable of moving in a direction of an axis X3. Furthermore, this second shift fork shaft 52 is connected to a second shift fork 62 provided between a third shift stage gear and a fourth shift stage gear (not shown in the figure) and fitted onto a sleeve of a synchro mechanism selectively transferring motive energy to this third shift stage gear and fourth shift stage gear, and when the second shift fork shaft 52 is moved in the direction of the axis X3, the second shift fork 62 is also moved in the axis direction in an interlocked manner so that the third shift stage or the fourth shift stage is selectively established.

The above-mentioned third shift fork shaft 53 is supported in parallel with the shift-and-select shaft 5 and so as to be capable of moving in a direction of an axis X4. Furthermore, this third shift fork shaft 53 is connected to a third shift fork 63 provided between a fifth shift stage gear and a sixth shift stage gear (not shown in the figure) and fitted onto a sleeve of a synchro mechanism selectively transferring motive energy to this fifth shift stage gear and sixth shift stage gear, and when the third shift fork shaft 53 is moved in the direction of the axis X4, the third shift fork 63 is also moved in the axis direction in an interlocked manner so that the fifth shift stage or the sixth shift stage is selectively established.

It should be noted that a channel is provided on an external perimeter surface of each of the first shift fork shaft 51 to the third shift fork shaft 53, and a shift check mechanism 70 for both generating a feeling of moderation upon a shift operation and preventing gear slip-off is provided by pressing a ball into this channel using an urging force of a spring.

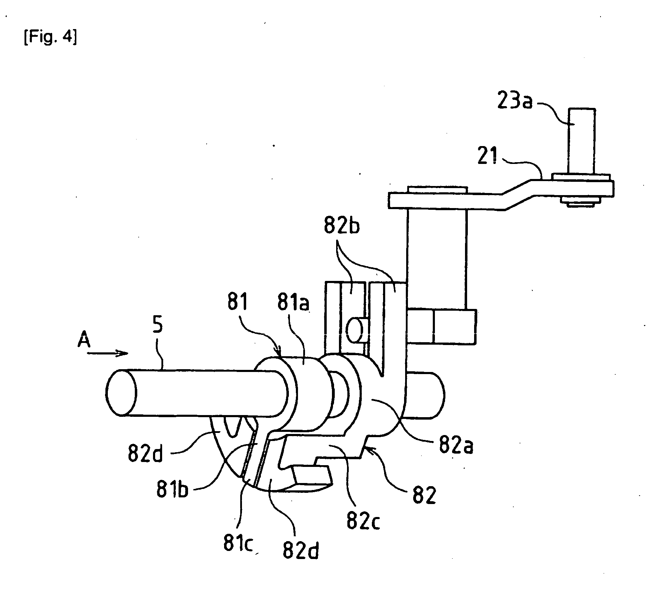

An inner lever 81 for selectively moving any one of the first shift fork shaft 51 to the third shift fork shaft 53 in an axis direction is provided on the above-mentioned shift-and-select shaft 5. FIG. 4 is a perspective view of the inner lever 81 and a peripheral section thereof. As shown in FIG. 4, the inner lever 81 is connected to the shift-and-select shaft 5 so as to be incapable of relative rotation and incapable of relative motion in the direction of the axis X1. Furthermore, the inner lever 81 is provided with a cylindrically-shaped cylindrical section 81 a externally fitted onto an external peripheral surface of the shift-and-select shaft 5, a base section 81b protruding in a radial direction from an outer circumferential surface of that cylindrical section 81a and having a cross-section extending longitudinally in the direction of the axis X1, and in addition, an engagement section 81c having a thickness in a circumferential direction thinner than the base section 81b, protruding from an outer edge of that base section 81b and having a cross-section extending longitudinally in the direction of the axis X1 in the same way as the base section 81b.

An interlock member 82 makes sliding contact with both sides of this base section 81b in a circumferential direction thereof. A cylindrical section 82a supported so as to be capable of moving in the direction of the axis X1 and rotating around the axis X1 relative to the shift-and-select shaft 5, a pair of rotation transmission members 82b, 82b extending from both ends of an external peripheral surface of that cylindrical section 82a in parallel with each other so as to be opposed, a sliding member 82c extending from that cylindrical section 82a in the axis direction and also sliding on both sides of the base section 81b of the inner lever 81 in a circumferential direction thereof, and a pair of guide members 82d, 82d extending from both sides of this sliding member 82c towards an outer side in a radial direction and also extending in a circumferential direction with an arc shape are provided on this interlock member 82. A length of this guide member 82d in the axis direction is substantially equivalent to a length of the engagement section 81c of the inner lever 81 in the direction of the axis X1. Furthermore, a gap between the cylindrical section 81a of the inner lever 81 and the cylindrical section 82a of the interlock member 82 in the direction of the axis X1 is provided such that the inner lever 81 is capable of moving to both sides in the direction of the axis X1.

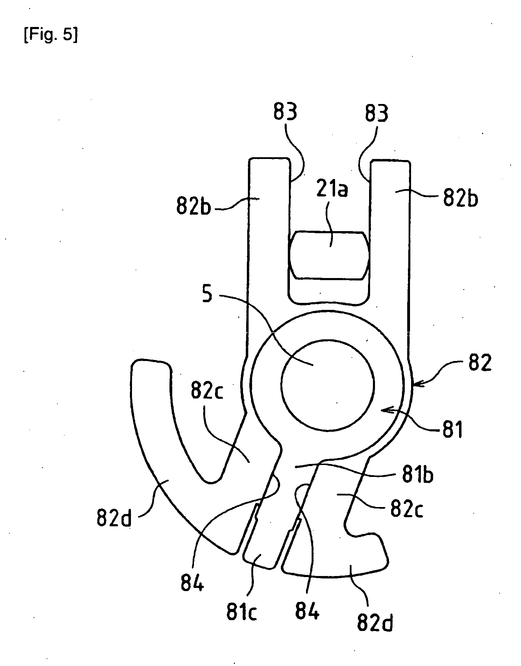

FIG. 5 is an arrow view of the inner lever 81 and the interlock member 82 of FIG. 4 seen from the direction of an arrow A parallel to the axis X1 of the shift-and-select shaft 5. A select inner lever 21 a provided on the select outer lever 21 is interposed between the mutually opposing pair of rotation transmission members 82b, 82b of the interlock member 82. When the select inner lever 21a presses in a perpendicular direction with respect to a contact surface 83 of the rotation transmission member 82b in accordance with a select operation force of the select outer lever 21, the interlock member 82 is rotated with the shift-and-select shaft 5 as a center of rotation. On the sliding members 82c, furthermore, mutually opposing surfaces making contact with both sides of the base section 81b of the inner lever 81 in a circumferential direction thereof constitute a pair of guide surfaces 84 transferring rotation of the select outer lever 21 due to the select operation to the inner lever 81. Furthermore, the thickness of the engagement section 81c of the inner lever 81 in the circumferential direction thereof is thinner than the thickness of the base section 81b, and a gap between the guide members 82d, 82d sandwiching that engagement section 81c of the inner lever 81 is larger than a gap between the opposing guide surfaces 84, 84.

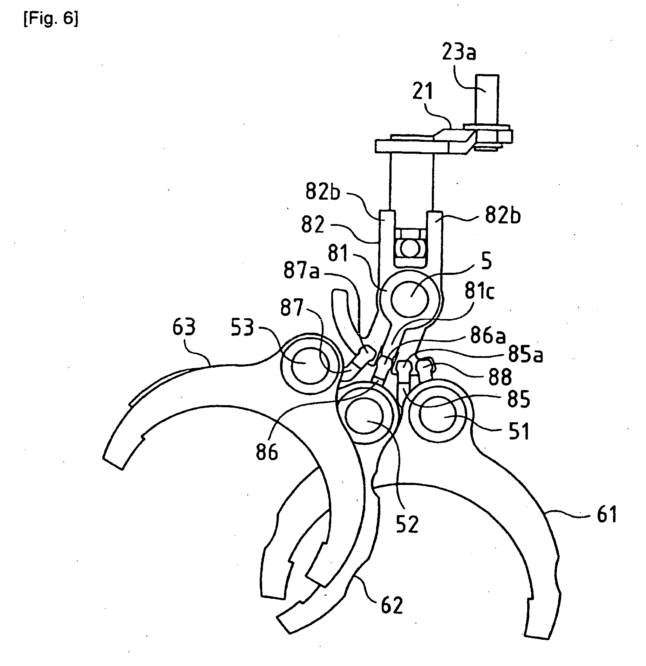

FIG. 6 is a view of the manual transmission of FIG. 3 seen from the direction of an arrow B parallel to the axis X1. As shown in FIG. 6, an internal perimeter surface of the first shift fork 61 to third shift fork 63 has an arc shape so as to be capable of engaging with a sleeve (not shown in the figure). Furthermore, a first shift head 85a.is connected from the first shift fork shaft 51 via a first connection member 85. Similarly, a second shift head 86a is connected from the second shift fork shaft 52 via a second connection member 86, and a third shift head 87a is connected from the third shift fork shaft 53 via a third connection member 87. Furthermore, a reverse-use shift head 88 formed on a reverse arm for a reverse stage (not shown in the figure) is disposed adjacent to the first shift head 85a.

As shown in FIG. 3, an engagement groove 89 is formed in the first shift head 85a in order to engage with both ends of the engagement section 81 c of the inner lever 81 in the axis direction. Furthermore, a similar engagement groove is also provided on the other shift heads, 86a, 87a, 88.

In a manual transmission configured in this way, in a case wherein, for example, the third shift stage or the fourth shift stage is selected, the interlock member 82 is rotated with the shift-and-select shaft 5 as a center of rotation due to a select operation of the select outer lever 21, and the rotation thereof is transferred via the guide surfaces 84 of the interlock member 82 to the inner lever 81 in an interlocked manner. Here, in the third shift stage and the fourth shift stage, as shown in FIG. 6, it rotates as far as, and is positioned at, a position whereat the engagement section 81c of the inner lever 81 and the second shift head 86a of the second shift fork shaft 52 overlap in the axis direction, or in other words, a position whereat the engagement section 81c engages with the second shift head 86a. When, as explained above, the engagement section 81 c and the second shift head 86a are engaged and the inner lever 81 is moved in the direction of the axis X1 interlocked with a shift operation of the shift outer lever 31, the second shift head 86a engaged with the engagement section 81c is also similarly moved in the direction of the axis X3. When the second shift fork 62 of the second shift fork shaft 52 is moved in the direction of the axis X3 interlocked with this movement of the second shift head 86a, a sleeve of a synchro mechanism (not shown in the figure) is moved and the third shift stage gear or the fourth shift stage gear is established.

Furthermore, in a case wherein the first shift stage or the second shift stage is selected, the interlock member 82 is rotated with the shift-and-select shaft 5 as the center of rotation due to a select operation of the select outer lever 21, and the rotation thereof is transferred via the guide surfaces 84 of the interlock member 82 to the inner lever 81 in an interlocked manner. Here, in the first shift stage and the second shift stage, it rotates as far as, and is positioned at, a position whereat the engagement section 81c of the inner lever 81 and the first shift head 85a of the first shift fork shaft 51 overlap in the axis direction, or in other words, a position whereat the engagement section 81c engages with the first shift head 85a. When the engagement section 81 c and the first shift head 85a are engaged and the inner lever 81 is moved in the direction of the axis X1 interlocked with the shift operation of the shift outer lever 31 as explained above, the first shift head 85a engaged with the engagement section 81c is also similarly moved in the direction of the axis X2. When the first shift fork 61 of the first shift fork shaft 51 is moved in the direction of the axis X2 interlocked with this movement of the first shift head 85a, a sleeve of a synchro mechanism (not shown in the figure) is moved and the first shift stage gear or the second shift stage gear is established.

Furthermore, in a case wherein the fifth shift stage or the sixth shift stage is selected, the interlock member 82 is rotated with the shift-and-select shaft 5 as the center of rotation due to a select operation of the select outer lever 21, and the rotation thereof is transferred via the guide surfaces 84 of the interlock member 82 to the inner lever 81 in an interlocked manner. Here, in the fifth shift stage and the sixth shift stage, it rotates as far as, and is positioned at, a position whereat the engagement section 81c of the inner lever 81 and the third shift head 87a of the third shift fork shaft 53 overlap in the axis direction, or in other words, a position whereat the engagement section 81c engages with the third shift head 87a. When the engagement section 81c and the third shift head 87a are engaged and the inner lever 81 is moved in the direction of the axis X1 interlocked with the shift operation of the shift outer lever 31 as explained above, the third shift head 87a engaged with the engagement section 81c is also similarly moved in the direction of the axis X4. When the third shift fork 63 of the third shift fork shaft 53 is moved in a direction of the axis X4 interlocked with this movement of the third shift head 87a, a sleeve of a synchro mechanism (not shown in the figure) is moved and the fifth shift stage gear or the sixth shift stage gear is established.

Furthermore, in a case wherein the reverse shift stage is selected, the inner lever 81 is engaged with a reverse arm (not shown in the figure) due to the select operation of the select outer lever 21, and as a result of motion of the reverse arm interlocked with the shift operation of the shift outer lever 31, a reverse idler gear (not shown in the figure) moves and a reverse shift stage is established.

### Adjustment Mechanism for Select Cable Length

Next, a length adjustment mechanism for the select cable 2, constituting a configuration characteristic of this embodiment, is explained.

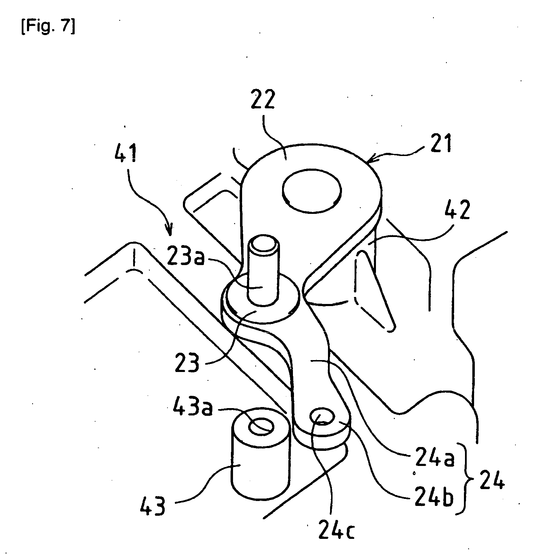

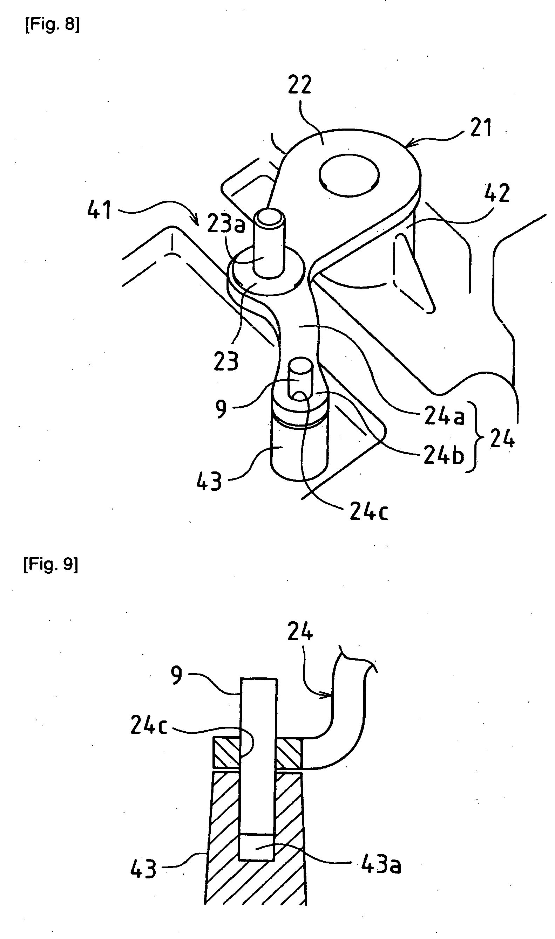

FIG. 7 and FIG. 8 are perspective views showing the above-mentioned select outer lever 21 and a section of an outer surface of the transmission case 41 in the vicinity thereof. As shown in these figures, the select outer lever 21 is disposed on an upper surface of the transmission case 41, is supported so as to be capable of rotating freely around a vertical axis, and as explained above, performs a rotation operation (select operation) of the shift-and-select shaft 5 by rotating as a result of receiving an operation force of the shift lever 1 via the select cable 2.

Furthermore, this select outer lever 21 comprises a base section 22 supported on the upper surface of the transmission case 41, a cable connection section 23 whereto the select cable 2 is connected, and a positioning-use arm 24 used in order to perform rotation positioning upon adjustment of the cable length, formed as one.

The above-mentioned base section 22 is inserted into a boss section 42 formed on the upper surface of the transmission case 41 and is capable of rotation around an axis of this boss section 42. A rotation operation of the shift-and-select shaft 5 is performed pursuant to this rotation.

A connection pin 23a is provided extending vertically upwards on an upper surface of the cable connection section 23, and the above-mentioned select cable 2 is connected to this connection pin 23a (see FIG. 1). That is to say, a force of operation in the select direction with respect to the shift lever 1 by the driver is transferred to this connection pin 23a via the select cable 2, and as a result thereof, the select outer lever 21 rotates with the above-mentioned base section 22 as a center of rotation.

The above-mentioned positioning-use arm 24 is formed continuously from the above-mentioned cable connection section 23 and is provided with a suspension section 24a extending downward towards the upper surface of the transmission case 41 from this cable connection section 23 and a positioning section 24b extending in a horizontal direction from a lower edge of this suspension section 24a. In addition, an opening 24c is formed at a center of this positioning section 24b passing through in a vertical direction. In a plan view, this opening 24c has a circular shape.

Meanwhile, a positioning boss 43 used upon positioning of a rotation position of the above-mentioned select outer lever 21 is provided on the upper surface of the transmission case 41. A position of formation of this positioning boss 43 corresponds to a prescribed position on a motion path of the opening 24c formed in the above-mentioned positioning-use arm 24 upon rotation of the above-mentioned select outer lever 21. Specifically, the positioning boss 43 is formed so as to oppose the position of the above-mentioned opening 24c at a rotation position of the select outer lever 21 in a case wherein the shift-and-select shaft 5 is at the first-speed / second-speed select position (Low position). Furthermore, an opening 43a having a circular shape in plan view is formed at a central section of this positioning boss 43, and an internal diameter dimension of this opening 43a is approximately consistent with an internal diameter dimension of the opening 24c formed in the above-mentioned positioning-use arm 24.

### Adjustment Operation for Select Cable Length

Next, a length adjustment operation for the select cable 2 using the above-explained adjustment mechanism for select cable length is explained.

First, from a condition wherein, for example, the select outer lever 21 is not subjected to a position restriction as shown in FIG. 7, this select outer lever 21 is rotated manually and the position of the opening 24c formed in the positioning-use arm 24 is set to a position opposing the opening 43a of the positioning boss 43 formed on the above-mentioned transmission case 41. As a result thereof, the shift-and-select shaft 5 adopts the first-speed / second-speed select position (Low position: referred to as the cable adjustment standard position in the present invention).

In this condition, a pin 9 prepared in advance is inserted across the openings 24c, 43a as shown in FIG. 8. This pin 9 is a metallic member having a cylindrical shape, and an external diameter dimension thereof is designed so as to be either approximately consistent with, or slightly smaller than, the internal diameter dimension of the above-mentioned openings 24c, 43a. As a result thereof, the rotation position of the select outer lever 21 becomes restricted, and simultaneously, the shift-and-select shaft 5 is also fixed at the first-speed / second-speed select position (Low position). FIG. 9 is a cross-sectional view showing a condition wherein the pin 9 is inserted across these openings 24c, 43a. In this way, a so-called fixing means of the present invention is configured using the above-mentioned positioning-use arm 24, the positioning boss 43, and the pin 9.

In addition, a position of the shift lever 1 (select position) is positioned so as to correspond to this fixing position of the shift-and-select shaft 5. In the case of this embodiment, the shift lever 1 is positioned at the first-speed / second-speed select position (Low position). As the shift lever 1 according to this embodiment is provided with a pull collar mechanism as explained above, if a select operation towards the reverse select position is performed without performing a pulling-up operation of the pull collar of this pull collar mechanism, the shift lever 1 becomes positioned at the first-speed / second-speed select position (Low position: referred to as a stopper position in the present invention that is a boundary section between the select position of a forward travel stage and the select position of the reverse travel stage) and operating efficiency is favorable.

In this condition, the shift lever 1 and the select outer lever 21 are connected by the select cable 2.

As a result of the select cable 2 being connected in this way, the cable length can be adjusted with both the shift-and-select shaft 5 and the shift lever 1 in a condition of being positioned at the first-speed / second-speed select position (Low position), and therefore, the length of the select cable 2 can be suitably adjusted, and the positional relationship between the shift lever 1 and the select outer lever 21, or in other words, the positional relationship between the shift lever 1 and the shift-and-select shaft 5 can be achieved in a precise and reliable manner.

After the shift lever 1 and the select outer lever 21 have been connected by the select cable 2 as explained above, the above-mentioned pin 9 is extracted from the openings 24c, 43a and the operation is completed. When the extraction operation of this pin 9 is performed, the shift lever 1 and the select outer lever 21 both return to the third-speed / fourth-speed select position (N position) (for example, return to a position as shown in FIG. 7). This is because a spring not shown in the figure and applying a spring force for return to the neutral position (N position) is connected to the shift lever 1 and the select outer lever 21.

As explained above, in this embodiment, length adjustment of the select cable 2 can be suitably carried out without the number of components increasing as it is possible to adjust the cable length while performing a position restriction of the shift-and-select shaft 5 by fixing the select outer lever 21 using the transmission case 41, and in addition, without being affected by looseness occurring between various mechanism components inside the speed change mechanism 4 as position fixing of the shift-and-select shaft 5 is performed outside the speed change mechanism 4 using the select outer lever 21. It should be noted that, in consideration of extension of the select cable 2 as a result of the passage of time, it is preferable that the length of the select cable 2 adjusted in this case be set slightly shorter than the suitable length (shorter within a range wherein erroneous operation of a speed change is not caused to occur).

Furthermore, as the above-mentioned pin 9 is to be extracted from the openings 24c, 43a, the presence of this pin 9 does not increase the weight of the transmission. Furthermore, when compared with a conventional transmission, only addition of the positioning boss 43 to the transmission case 41 and addition of the positioning-use arm 24 to the select outer lever 21 is carried out, and therefore, the weight of the transmission is not greatly increased.

It should be noted that, in the case of this embodiment, if a length of the positioning-use arm 24 of the above-mentioned select outer lever 21 is set long and a radius of the path of rotation of the opening 24c formed in the positioning section 24b is set large, a large amount of motion of the opening 24c with respect to the rotation angle of the select outer lever 21 can be achieved, and therefore, the rotation angle of the select outer lever 21, or in other words, the fixing position of the shift-and-select shaft 5, can be managed with a high degree of precision.

### Other Embodiments

In the above-explained embodiment, a case of application of the present invention to a manual transmission having 6 forward shift stages and 1 reverse shift stage was explained. The present invention is not limited to this, and application to a transmission with a different number of stages (for example, a transmission with 5 forward shift stages and 1 reverse shift stage) is also possible.

Furthermore, although a case of application of the present invention as an item for performing adjustment of the length of the select cable 2 was explained in the above embodiment, application thereof as an item for adjustment of the length of the shift cable 3 is also possible.

Furthermore, although the first-speed / second-speed select position (Low position) was adopted as the cable adjustment standard position of the shift-and-select shaft 5 constituting the fixing position for performing adjustment of the length of the select cable 2 in the above embodiment, the present invention is not limited to this, and it can be the third-speed / fourth-speed select position (N position) or the fifth-speed / sixth-speed select position (Low position). In particular, as explained above, when the spring force of the shift lever spring constituting a spring for returning the shift lever 1 to the neutral position is set higher than the spring force of the outer lever spring constituting a spring for returning the select outer lever 21 to the neutral position, a retention force in the above-mentioned N position is large, and therefore, it is preferable that the third-speed / fourth-speed select position (N position) be adopted as the cable adjustment standard position.

Furthermore, although the pin 9 was used as a tool for performing position fixing of the select outer lever 21 on the transmission case 41, a standard tool such as a screwdriver, etc. can also be used. In such a case, the internal diameter dimension of the openings 24c, 43a must be made consistent with an external diameter dimension of the screwdriver, etc. Furthermore, the pin 9 is not limited to a pin that can be removed from the transmission case 41 and can also be a pin that is mounted on the transmission case 41. As a result thereof, it is possible to prevent loss of the pin 9, and in addition, operation efficiency is improved upon readjustment of the length of the select cable 2.

It should be noted that without departure from the intention, gist, and principal characteristics thereof, the present invention can have many other embodiments. Accordingly, the above-explained embodiments are no more than simple examples and should not be interpreted in a limited manner. The scope of the present invention is set forth by the scope of the claims, and the disclosure is in no way binding. Furthermore, all modifications and changes within a scope equivalent to that of the claims are within the scope of the present invention.

### Industrial Applicability

As the adjustment mechanism for a speed-change cable of a manual transmission of the present invention has a simple configuration, it is possible to reduce weight and achieve low cost, and in addition, it is possible to adjust the length of the speed-change cable with a high degree of precision, providing an advantage in terms of high reliability. Furthermore, it also contributes greatly to operation efficiency in the manufacture of manual transmissions.

## Claims

1. An adjustment mechanism for a speed-change cable (2, 3) of a manual transmission having a shift lever (1) operated by a driver, a shift-and-select shaft (5) enabling a speed-change operation by a speed change mechanism (4) provided inside a transmission case (41), and an outer lever (21) provided outside the transmission case (41), linked with the shift-and-select shaft (5), and also connected to the shift lever (1) so as to be capable of transferring an operation force via the speed-change cable (2, 3), comprising:
a fixing means (9) for fixing the shift-and-select shaft (5) at a prescribed cable adjustment standard position (P1) by fixing a position of the outer lever (21) on the transmission case (41),
**characterized in that**
the fixing means (9) is configured such that an opening (24c, 43a) is formed on each of the outer lever (21) and the transmission case (41), and the position of the outer lever (21) is fixed on the transmission case (41) by aligning these openings (24c, 43a) and inserting a pin (9) therein.

2. The adjustment mechanism for a speed-change cable of a manual transmission of claim 1, wherein:
the shift lever (1) is provided with a reverse operation mechanism operated upon a select operation from a select position (P1, P2, P3) of a forward travel stage to a select position of a reverse travel stage, and the select position (P4) for the reverse travel stage is provided independently of the select position for the forward travel stage in a select direction (X) thereof.

3. The adjustment mechanism for a speed-change cable of a manual transmission of claim 2, wherein:
the cable adjustment standard position (P1) of the shift-and-select shaft (5) fixed by the fixing means (9) is a boundary section of the select position (P1, P2, P3) for the forward travel stage and the select position (P4) for the reverse travel stage in the select direction (X) of the shift lever (1).

## Patentansprüche

1. Einstellmechanismus für ein Gangwechselkabel (2, 3) eines Handschaltgetriebe, das einen von einem Fahrer betätigten Schalthebel (1), einen Schalt- und Auswahlschaft (5), der einen Gangwechselvorgang durch einen Gangwechselmechanismus (4) ermöglicht, der innerhalb eines Getriebegehäuses (41) vorgesehen ist, und einen Außenhebel (21) hat, der außerhalb des Getriebegehäuses (41) vorgesehen ist, der mit dem Schalt-und Auswahlschaft (5) gekoppelt ist und zudem mit dem Schalthebel (1) verbunden ist, um eine Übertragung einer Betätigungskraft über das Gangwechselkabel (2, 3) zu ermöglichen, mit:
einer Fixierungseinrichtung (9) zum Fixieren des Schalt-und Auswahlschafts (5) an einer vorgeschriebenen Kabeleinstellstandardstellung (P1) durch Fixieren einer Stellung des Außenhebels (21) auf dem Getriebegehäuse (41),
**dadurch gekennzeichnet, dass**
die Fixierungseinrichtung (9) so gestaltet ist, dass eine Öffnung (24c, 43a) sowohl an dem Außenhebel (21) als auch an dem Getriebegehäuse (41) ausgebildet ist, und die Stellung des Außenhebels (21) an dem Getriebegehäuse (41) fixiert wird, indem diese Öffnungen (24c, 43a) ausgerichtet werden und ein Stift (9) darin eingebracht wird.

2. Einstellmechanismus für ein Gangwechselkabel eines Handschaltgetriebes von Anspruch 1, wobei:
der Schalthebel (1) mit einem Rückwärtsbetätigungsmechanismus vorgesehen ist, der infolge einer Auswahlbetätigung von einer Auswahlstellung (P1, P2, P3) einer Vorwärtsfahrstufe zu einer Auswahlstellung einer Rückwärtsfahrstufe betätigt wird, und die Auswahlstellung (P4) für die Rückwärtsfahrstufe unabhängig von der Auswahlstellung für die Vorwärtsfahrstufe in einer Auswahlrichtung (X) dieser vorgesehen ist.

3. Einstellmechanismus für ein Gangwechselkabel eines Handschaltgetriebes von Anspruch 2, wobei:
die Kabeleinstellstandardstellung (P1) des Schalt- und Auswahlschafts (5), der durch die Fixierungseinrichtung (9) fixiert ist, ein Grenzabschnitt der Auswahlstellung (P1, P2, P3) für die Vorwärtsfahrstufe und der Auswahlstellung (P4) für die Rückwärtsfahrstufe in der Auswahlrichtung (X) des Schalthebels (1) ist.

## Revendications

1. Mécanisme de réglage pour un câble (2, 3) de changement de vitesse d'une transmission manuelle comportant un levier (1) de changement de rapport manoeuvré par un conducteur, un arbre (5) de décalage et choix permettant une opération de changement de vitesse par un mécanisme (4) de changement de vitesse disposé à l'intérieur d'un carter (41) de transmission, et un levier externe (21) disposé à l'extérieur du carter (41) de transmission, lié à l'arbre (5) de décalage et choix, et aussi raccordé au levier (1) de changement de rapport de façon à être capable de transférer une force de manoeuvre via le câble (2, 3) de changement de vitesse, comprenant :
un moyen (9) de fixation destiné à fixer l'arbre (5) de décalage et choix à une position standard imposée (P1) de réglage de câble en fixant la position du levier externe (21) sur le carter (41) de transmission,
**caractérisé en ce que** le moyen (9) de fixation est constitué de façon qu'une ouverture (24c, 43a) est formée sur chacun du levier externe (21) et du carter (41) de transmission, et **en ce que** la position du levier externe (21) est fixée sur le carter (41) de transmission par alignement de ces ouvertures (24c, 43a) et introduction d'une broche (9) dans celles-ci.

2. Mécanisme de réglage pour un câble de changement de vitesse d'une transmission manuelle selon la revendication 1, dans lequel :
le levier (1) de changement de rapport est pourvu d'un mécanisme de manoeuvre de marche arrière mis en oeuvre lors d'une manoeuvre de choix d'une position de choix (P1, P2, P3) d'un stade de marche avant à une position de choix d'un stade de marche arrière, et dans lequel la position (P4) de choix pour le stade de marche arrière est prévue indépendamment de la position de choix pour le stade de marche avant dans sa direction (X) de choix.

3. Mécanisme de réglage pour un câble de changement de vitesse d'une transmission manuelle selon la revendication 2, dans lequel :
la position standard (P1) de réglage de câble de l'arbre (5) de décalage et choix fixée par le moyen (9) de fixation est une section frontière de la position (P1, P2, P3) de choix pour le stade de marche avant et de la position (P4) de choix pour le stade de marche arrière dans la direction (X) de choix du levier (1) de changement de rapport.
